# EUROPÄISCHE PATENTANMELDUNG

(11) **EP 0 942 512 A1**
(43) Veröffentlichungstag der Anmeldung: **15.09.1999**
(21) Anmeldenummer: 99890053.4
(22) Anmeldetag: 12.02.1999
(51) Int. Cl.: H02K 3/34, H02K 3/38

(54) **Träger für die Statorwicklung von Elektromotoren**

(30) Priorität: 10.03.1998 AT 41798
(71) Anmelder: ATB Austria Antriebstechnik Aktiengesellschaft, 8724 Spielberg (Steiermark) (AT)
(72) Erfinder: Kurz, Anton, 8740 Zeltweg (AT)
(74) Vertreter: Beer, Manfred, Dipl.-Ing.

(57) **Zusammenfassung**

Ein Träger (1) für die Statorwicklung eines Elektromotors trägt an seiner Außenseite paarweise angeordnete, stegartige Anformungen (2), die zwischen sich Aufnahmeräume (3) für die Drähte (4) der Statorwicklung bilden. Zwischen den freien, radial außen liegenden und aufeinanderzu gebogenen Rändern (5) jedes Paares stegartiger Anformungen (2) sind Schlitze (6) vorgesehen, durch welche die Drähte (4) der Wicklung in die Aufnahmeräume (3) einlegbar sind.

Die A-seitigen Enden der stegartigen Anformungen (2) gehen von einem Ringflansch (10) aus, der von einem zylinderförmigen Ring (7) absteht.

Die B-seitigen Enden der stegartigen Anformungen (2) sind mit einem zylinderförmigen Ring (8) verbunden.

## Beschreibung

Die Erfindung betrifft einen Träger für die Statorwicklung von Elektromotoren ("Wicklungsträger") mit dessen Hilfe die Statorwicklungen eines Elektromotors in den Stator eingesetzt werden können.

Üblicherweise werden die Statorwicklungen von Elektromotoren unmittelbar in das Statorblechpaket eingebracht. Dies ist insbesondere bei kleineren Motoren nur mit erheblichem Aufwand möglich, zumal in die Nuten zwischen den Zähnen des Statorblechpaketes auch sogenannte Statornuten-Isolationen eingesetzt werden müssen, die für die Isolierung zwischen der Motorwicklung einerseits und den jeweils die einzelnen Nuten begrenzenden Zähnen des Statorpaketes andererseits sorgen.

Die FR 2 328 318 A zeigt Isolationen, die in Nuten eines Rotors angeordnet werden. Dabei sind diese Isolationen in mehrere Abschnitte unterteilt und der die Isolationen vor der Montage zusammenhaltende Ring soll nach der endgültigen Montage der Isolationen in den Nuten des Rotors abgetrennt werden.

Die CH 409 104 A zeigt ebenfalls für einen Rotor und nicht für einen Stator bestimmte Isolationen für die Aufnahme der Rotorwicklung, wobei die einzelnen Isolationen durch einen Endflansch miteinander verbunden sind, so daß die Isolationen von der Seite her in die Nuten des Rotors eingeschoben werden können.

Die Anordnung gemäß der CH 409 104 A aus Isolationen und Endflansch kann nicht bewickelt werden, bevor sie in den Rotor eingeschoben wird, da anders als bei Statoren von Elektromotoren das Einschieben eines bewickelten Trägers bei einem Rotor nicht möglich ist.

Der Erfindung liegt die Aufgabe zugrunde einen Träger für die Statorwicklung eines Elektromotors zur Verfügung zu stellen, mit dem das Herstellen der Statorwicklung vereinfacht ist.

Gelöst wird diese Aufgabe mit einem Träger mit den Merkmalen des Anspruches 1.

Bevorzugte und vorteilhafte Ausgestaltungen des erfindungsgemäßen Wicklungsträgers sind Gegenstand der Unteransprüche.

Bei Verwendung des erfindungsgemäßen Wicklungsträgers können die Statorwicklungen eines Elektromotors auf den Wicklungsträger vormontiert werden. Es genügt dann, den Wicklungsträger mit den an ihm vormontierten Wicklungen in den Stator einzuschieben, was ohne weiteres möglich ist. Das mühsame Einbringen der Drähte der Statorwicklung unmittelbar in die Nuten eines Statorpaketes entfällt somit bei der Erfindung.

Ein Vorteil bei Verwendung des erfindungsgemäßen Wicklungsträgers liegt vor allem in der wesentlich vereinfachten Wicklungsmontage, vornehmlich bei kleinen, einfachen Elektromotoren, bei welchen sonst der Wicklungseinbau infolge der sehr schwierigen räumlichen Verhältnisse nicht nur schwierig, sondern oft auch mit großem Ausschuß verbunden ist.

In einer Ausführungsform des erfindungsgemäßen Wicklungsträgers übernehmen die vom äußeren Umfang des im wesentlichen zylindrischen Trägers abstehend angeordneten, stegartigen Anformungen, zwischen welchen die Wicklungsdrähte der Statorwicklung aufgenommen sind, die Funktion der Nutenisolierungen. Bei dieser Ausführungsform ist vorgesehen, daß sich die in Achsrichtung verlaufenden Schlitze zwischen den stegartigen Anformungen beim Einschieben in das Statorblechpaket schließen und so die Statornutenisolation bilden. Dabei kann in einer weiteren Ausführungsform vorgesehen sein, daß die zwischen den Stegen aufgenommenen Wicklungsdrähte nach außen hin durch einen Streifen aus Isolationsmaterial abgedeckt werden, so daß eine zusätzliche Sicherung der Wicklungsdrähte und eine verbesserte Statornutenisolation erzielt wird.

Von Vorteil insbesondere bei kleinen, einfachen Elektromotoren ist es, daß der erfindungsgemäße Wicklungsträger auch dazu herangezogen werden kann, die Rotorlagerung des Elektromotors zu übernehmen, wozu in diesem Fall Lagersitze für die Aufnahme des lüftungsseitigen und/oder des abtriebsseitigen Rotorlagers vorgesehen sein können.

Um zu erreichen, daß die Wicklungsköpfe, die bezogen auf die Einschubrichtung des Wicklungsträgers in das Statorblechpaket vorne liegen, in eine Lage verformt werden können, in der sie der endseitigen Fläche des Statorblechpaketes gegenüberliegen, kann gemäß einer Ausführungsform der Erfindung vorgesehen sein, daß die dort angeordneten Teile des Wicklungsträgers zum Abtrennen vorbereitet sind. Nach dem Entfernen der überstehenden Teile, die zunächst zur Führung der Wicklungsdrähte beim Herstellen der Statorwicklung am noch nicht in das Statorblechpaket eingeschobenen Wicklungsträger dienen, können die dort liegenden Wicklungsköpfe radial nach außen verformt werden, so daß sie die an sich günstige Lage neben der Endfläche des Statorblechpaketes einnehmen.

Weitere Einzelheiten, Merkmale und Vorteile des erfindungsgemäßen Wicklungsträgers ergeben sich aus der nachstehenden Beschreibung des in der Zeichnung gezeigten Ausführungsbeispieles. Es zeigt:
Fig. 1 einen bewickelten Wicklungsträger und
Fig. 2 den bewickelten Wicklungsträger aus Fig. 1 beim Einschieben in ein Statorblechpaket.

Ein erfindungsgemäßer Wicklungsträger 1 ist ein im wesentlichen, zylindrisch geformter Körper aus isolierendem Werkstoff, insbesondere aus isolierendem Kunststoff.

An der Außenumfangsfläche des zylindrischen Trägers 1 sind über dessen Umfang gleichmäßig verteilt, stegartige Anformungen 2 vorgesehen, wobei jeweils zwei stegartige Anformungen 2 zwischen sich einen Aufnahmeraum 3 für Wicklungsdrähte 4 bilden. Die achsparallelen, freien Ränder 5 der stegartigen Anformungen 2 sind um parallel zur Achse des Trägers 1 verlaufende Achsen aufeinanderzu gekrümmt, so daß eine der Querschnittsform der Statornuten 31 annähernd entsprechende Außenform jedes Paares aus stegartigen Anformungen 2 erreicht wird.

Die stegartigen Anformungen 2 weisen von zwei zylinderförmigen Ringen 7 und 8, die an den Enden des Trägers 1 zu dessen Achse konzentrisch angeordnet sind, nach außen.

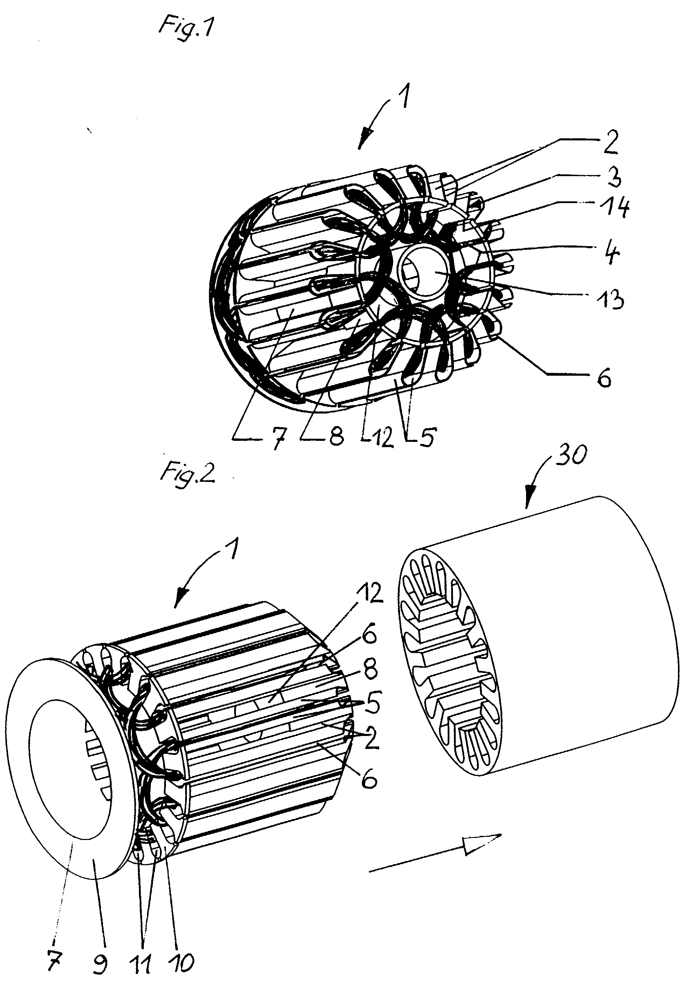

An dem in Fig. 2 links sichtbaren Ring 7 sind zwei Ringflansche 9 und 10 vorgesehen, die vom zylindrischen Ring 7 nach außen hin abstehen. In dem an den Enden der stegartigen Anformungen 2 vorgesehenen Ringflansch 10 sind radial nach außen offene Aussparungen 11 vorgesehen , durch welche die Drähte 4 der Wicklung geführt sind. Der an den in Fig. 2 links sichtbaren Ende des Wicklungsträgers 1 liegende Ring 7 kann als Aufnahme für das abtriebsseitige Lager (A-Lager) für die Welle des Rotors dienen.

Am inneren Ende des in Fig. 1 rechts sichtbaren zylinderförmigen Ringes 8 des Wicklungsträgers 1 ist eine vom zylinderförmigen Ring 8 nach innen weisende, zur Achse des Wicklungsträgers 1 senkrecht stehende, ringförmige Wand 12 vorgesehen, die eine zur Achse des Wicklungsträgers 1 konzentrische Hülse 13 für die Aufnahme des B--Lagers (lüftungsseitiges Lager) trägt. Der radial außerhalb dieser Hülse 13 vorgesehene, zu dieser konzentrische Ring 8 ist zwischen jedem Paar der stegartigen Anformungen 2 durch einen achsial verlaufenden Schlitz 14 unterbrochen. Durch diese Schlitze 14 im Ring 8 treten die Drähte 4 der Statorwicklung und bilden in dem Ringraum zwischen der Hülse 13 und dem Ring 8 Wicklungsköpfe.

Die B-seitigen, in Fig. 1 rechts liegenden Enden der stegartigen Anformungen 2 sind abgeschrägt, schließen also mit der Achse des Wicklungsträgers 1 einen spitzen Winkel ein. Dadurch wird das Einführen des Wicklungsträgers 1 (siehe Fig. 2) in ein Statorblechpaket 30 vereinfacht.

Die Abmessung der stegartigen Anformungen 2 einschließlich ihrer aufeinanderzu gekrümmten, freien Ränder 5 ist so gewählt, daß sich die zwischen den freien Rändern 5 der stegartigen Anformungen 2 liegenden, zunächst offenen Schlitze 6 beim Einführen des bewickelten Wicklungsträgers 1 in ein Statorblechpaket 30 schließen, so daß die stegartigen Anformungen 2 gleichzeitig die Isolation zu den Statornuten 31 bilden und gesonderte, in die Statornuten 31 einzuführende Nutenisolationen entbehrlich sind.

Zusätzlich kann vorgesehen sein, daß zwischen jedes Paar stegartiger Anformungen 2, die zwischen sich einen Wicklungsstrang aufnehmen, radial außerhalb der Wicklungsdrähte 4 ein Streifen aus Isolationsmaterial eingeschoben wird, der den zunächst noch offenen Schlitz 6 von innen her abdeckt und somit eine erhöhte Sicherheit der Nutenisolation gewährleistet.

Wie in den Fig. 1 und 2 gezeigt, werden die stegartigen Anformungen 2 ausschließlich an den Enden des Wicklungsträgers 1 einerseits vom Ringflansch 10 (A-Seite) und anderseits vom Ring 8 gehalten. So kann ein Rotor (Läufer) des Motors mit seiner Umfangsfläche bis nahe an die in den Aufnahmeräumen 3 zwischen den stegartigen Anformungen 2 aufgenommenen Wicklungsteile heranreichen.

Überdies ist der Inndendurchmesser des Ringes 7 wenigstens so groß wie der Außendurchmesser des Rotors, so daß dieser durch den Ring 7 hindurch in das Statorblechpaket eingeführt werden kann, nachdem die Statorwicklung mit Hilfe des Wicklungsträgers 1 im Statorblechpaket 30 montiert worden ist.

Wie Fig. 1 zeigt, sind die B-seitigen, zwischen der Hülse 13 und dem Ring 8 liegenden Wicklungsköpfe radial nach innen umgelegt. Damit die Wicklungsköpfe nach dem Einführen des Wicklungsträgers 1 in ein Statorblechpaket 30 so verformt werden können, daß die A-seitigen Wicklungsköpfe, der dort angeordneten Endfläche des Statorblechpaketes 30 gegenüberliegend angeordnet sind, werden die über die Wand 12 überstehenden Teile der stegartigen Anformungen 2 und der Ring 8 bevorzugt entfernt, nachdem der bewickelte Wwicklungsträger 1 in das Statorblechpaket 30 eingeführt worden ist. Um dies zu vereinfachen, kann vorgesehen sein, daß die über die Wand 12 überstehenden Teile der stegartigen Anformungen 2 und der dort vorgesehene, zylinderförmige Ring 8 zum Abtrennen vorbereitet, z.B. mit Schwächungslinien ausgebildet sind. So ist es möglich, nach dem Einführen des bewikkelten Wicklungsträgers 1 in ein Statorblechpaket 30 die dann über dieses auf der B-Seite überstehenden Teile des Wicklungsträgers 1 zu entfernen, worauf die dort liegenden Wicklungsköpfe radial nach außen gedrückt werden können, daß sie der B-seitigen (in Fig. 2 nicht sichtbaren) Endfläche des Statorblechpaketes 30 gegenüberliegend angeordnet sind.

Der Wicklungsträger 1, der um den Füllgrad der Wicklung in den Statornuten 31 möglichst groß zu halten, dünnwandig ausgebildet ist, kann beim Bewickeln durch geeignete Stützmaßnahmen gesichert werden, welche ein Verformen des Wicklungsträgers 1 während des Bewickelns verhindern. So kann z.B. zwischen einem Haltedorn und dem Wicklungsträger 1 während des Bewickelns Unterdruck angelegt werden, um den Wicklungsträger 1 sicher festzuhalten.

Der fertig bewickelte Wicklungsträger 1 wie er in Fig. 1 gezeigt ist, wird mit seinem die Hülse 13 für das B-seitige Rotorlager aufweisende Ende voran, wie in Fig. 2 gezeigt, ausgerichtet und in ein Statorblechpaket 30 eingeschoben. Dabei verbiegen sich die in die Statornuten 31 eintretenden stegartigen Anformungen 2, so daß sich die zunächst für das Einbringen der Wicklungsdrähte 4 noch offenen Schlitze 6 zwischen Paaren von stegartigen Anformungen 2 schließen und die Statornutenisolationen bilden.

Falls gewünscht, werden die B-seitig über das Statorblechpaket 30 überstehenden Enden der stegartigen Anformungen 2 und der Ring 8 dann abgetrennt, worauf die dort befindlichen Wicklungsköpfe nach außen gedruckt werden können, so daß sie der B-seitigen Stirnfläche des Statorblechpaketes 30 gegenüberliegend angeordnet sind.

Der erfindungsgemäße Träger 1 kann einstückig aus Kunststoff z. B. im Spritzgußverfahren hergestellt werden.

Zusammenfassend kann ein Ausführungsbeispiel der Erfindung wie folgt beschrieben werden:

Ein Träger 1 für die Statorwicklung eines Elektromotors trägt an seiner Außenseite paarweise angeordnete, stegartige Anformungen 2, die zwischen sich Aufnahmeräume 3 für die Drähte 4 der Statorwicklung bilden. Zwischen den freien, radial außen liegenden und aufeinanderzu gebogenen Rändern 5 jedes Paares stegartiger Anformungen 2 sind Schlitze 6 vorgesehen, durch welche die Drähte 4 der Wicklung in die Aufnahmeräume 3 einlegbar sind.

Die A-seitigen Enden der stegartigen Anformungen 2 gehen von einem Ringflansch 10 aus, der von einem zylinderförmigen Ring 7 absteht.

Die B-seitigen Enden der stegartigen Anformungen 2 sind mit einem zylinderförmigen Ring 8 verbunden.

## Patentansprüche

1. Träger (1) für die Statorwicklung eines Elektromotors, dadurch gekennzeichnet, daß der Träger (1) im wesentlichen zylindrisch geformt ist und an seiner Außenseite paarweise angeordnete, stegartige Anformungen (2) trägt, die zwischen sich Aufnahmeräume (3) für die Drähte (4) der Statorwicklung bilden, wobei die Anzahl der paarweise angeordneten, stegartigen Anformungen (2) der Zahl der Statornuten (31) im Statorblechpaket (30) des Elektromotors entspricht.

2. Träger nach Anspruch 1, dadurch gekennzeichnet, daß die freien, radial außen liegenden Ränder (5) jedes Paares stegartiger Anformungen (2) aufeinanderzu gekrümmt sind.

3. Träger nach Anspruch 1 oder 2, dadurch gekennzeichnet, daß zwischen den freien Rändern (5) der stegartigen Anformungen (2) Schlitze (6), durch welche die Wicklungsdrähte (4) zwischen die stegartigen Anformungen (2) einlegbar sind, vorgesehen sind.

4. Träger nach einem der Ansprüche 1 bis 3, dadurch gekennzeichnet, daß die stegartigen Anformungen (2) jedes Paares eine Außenumrißform aufweisen, die mit der Umrißform der Statornuten (31) wenigstens annähernd korrespondiert.

5. Träger nach einem der Ansprüche 1 bis 4, dadurch gekennzeichnet, daß die freien Ränder (5) der stegartigen Anformungen (2) jedes Paares stegartiger Anformungen (2) bei in ein Statorblechpaket (30) eingeschobenem Träger (1) aneinander anliegen.

6. Träger nach einem der Ansprüche 3 bis 5, dadurch gekennzeichnet, daß die Schlitze (6) zwischen den freien Rändern (5) der stegartigen Anformungen (2) jedes Paares stegartiger Anformungen (2) von innen her durch eine streifenförmige Isolierung abgedeckt sind.

7. Träger nach einem der Ansprüche 1 bis 6, dadurch gekennzeichnet, daß an beiden Enden des Trägers (1) Aufnahmen (7, 13) für die Lager der Rotorwelle des Elektromotors vorgesehen sind.

8. Träger nach Anspruch 7, dadurch gekennzeichnet, daß die Aufnahme für das lüftungsseitige (B-seitige) Lager der Rotorwelle eine Hülse (13) ist, die von einer quer zur Achse des Trägers (1) ausgerichteten Wand (12) absteht.

9. Träger nach Anspruch 7 oder 8, dadurch gekennzeichnet, daß Aufnahme für das abtriebsseitige (A-seitige) Lager der Rotorwelle ein zylinderförmiger Ring (7) ist, von dessen freiem Ende ein Ringflansch (9) nach außen absteht.

10. Träger nach einem der Ansprüche 1 bis 9, dadurch gekennzeichnet, daß die A-seitigen Enden der stegartigen Anformungen (2) mit einem vom zylinderförmigen Ring (7) abstehenden Ringflansch (10) verbunden sind und daß im Ringflansch (10) zwischen jedem Paar stegartiger Anformungen (2) eine radial nach außen offene Durchbrechung (11) für den Durchtritt der Wicklungsdrähte (4) vorgesehen sind.

11. Träger nach einem der Ansprüche 1 bis 10, dadurch gekennzeichnet, daß die B-seitigen Enden der stegartigen Anformungen (2) mit einem zylinderförmigen Ring (8) verbunden sind, in dem im Bereich zwischen jedem Paar stegartiger Anformungen (2) ein zum Ende des Trägers (1) hin offener Schlitz (14) für den Durchtritt der Wicklungsdrähte (4) vorgesehen ist.

12. Träger nach Anspruch 11, dadurch gekennzeichnet, daß der zylinderförmige Ring (8) mit der Wand (12) verbunden ist, welche die Hülse (13) für das B-seitige Lager der Rotorwelle trägt.

13. Träger nach Anspruch 12, dadurch gekennzeichnet, daß die über die Wand (12) überstehenden Teile der stegartigen Anformungen (2) zum Abtrennen vom Träger (1) vorbereitet, z.B. mit Schwächungslinien versehen sind.

14. Träger nach Anspruch 12 oder 13, dadurch gekennzeichnet, daß der innerhalb der B-seitigen Enden der stegartigen Anformungen (2) vorgesehene Ring (8) zum Abtrennen vom Träger (1) vorbereitet, z.B. mit Schwächungslinien versehen ist.
